Europäisches Patentamt

European Patent Office

Office européen des brevets

(19)

(11) Publication number: **0 251 391**
**B1**

(12) # EUROPEAN PATENT SPECIFICATION

(45) Date of publication of patent specification: **23.01.91**

(51) Int. Cl.⁵: **B 65 G 13/10,** B 65 G 47/54

(21) Application number: **87201170.5**

(22) Date of filing: **18.06.87**

(54) **Conveying device.**

(30) Priority: **23.06.86 NL 8601621**

(43) Date of publication of application:
**07.01.88 Bulletin 88/01**

(45) Publication of the grant of the patent:
**23.01.91 Bulletin 91/04**

(84) Designated Contracting States:
**AT BE CH DE ES FR GB GR IT LI LU NL SE**

(56) References cited:
**US-A-3 983 988**

(73) Proprietor: **RAPISTAN VAN DER LANDE B.V.**
**Rapistanlaan 2**
**NL-5466 RB Veghel (NL)**

(72) Inventor: **van den Goor, Jakobus Marie**
**Boxhornpad 6**
**NL-5641 WG Eindhoven (NL)**

(74) Representative: **Noz, Franciscus Xaverius, Ir.**
**et al**
**Boschdijk 155 P.O. Box 645**
**NL-5600 AP Eindhoven (NL)**

## Description

The invention relates to a conveying device provided with a frame, with drivable conveying means supported by the frame, and with a turn off mechanism with at least a number of wheels rotatable about axes of rotation, which are located at least substantially behind one another when seen in a direction transverse to the conveying direction of the conveying means, whilst the wheels can be turned about longitudinal axes of adjusting shafts between an inactive position and an operative position in which the axes of rotation of the wheels include an angle deviating from 90° with the conveying direction of the conveying means.

Such a conveying device is known from the Dutch patent 174,930 (figs. 1—4) (& US-A-3,983,988). When using such a conveying device objects moved by means of the conveying means of the conveying device will keep moving in the conveying direction determined by the conveying means when the wheels of the turn off mechanism are in an inactive position, whilst said objects will be moved at an angle relative to the above-mentioned conveying direction when the wheels of the turn off mechanism are in the operative position, as a result of which the objects in question can be delivered from the conveying device to another conveying device, a discharge duct or the like.

With the known device the wheels of the turn off mechanism assume a permanent vertical position relative to the conveying means, whereby said wheels slightly protrude from the conveying means at all times, also when the wheels are in an inactive position and the wheels will also get into contact with the objects moved by the conveying means, therefore, when they are in the inactive position and said objects will be lifted a little by the wheels to fall back on the conveying means against then. It will be apparent that such an unnecessary contact between objects moved and wheels of the turn off mechanism is disadvantageous.

On the other hand it is known, from said Dutch patent 174,930 (figs. 5 and 6) to make the wheels of the turn off mechanism vertically adjustable, so that the wheels in the inactive position can be withdrawn to a position in which they will not come into contact with the objects moved by the conveying means. The position of the axes of rotation of the wheels is not adjustable thereby, however. In practice, however, it is often desirable for the position of the axes of rotation of the wheels to be adjustable in order to be able to influence the direction in which the objects are moved, in the operative position of the wheels, relative to the conveying means.

According to the invention a wheel is displaceable to and fro in an adjustment direction corresponding to the axial direction of the adjusting shaft, the wheel or the frame being provided with a cam shaped means and the frame or the wheel with a guide face which is crossed by the adjusting shaft at an angle deviating from 90° such that on turning of the wheel about the longitudinal axis of the adjusting shaft from its inactive position the cam shaped means and the guide face move relative to each other and thus effect a displacement of the wheel in said adjustment direction.

By using the construction according to the invention it can be effected that on adjusting the wheel from the inactive position to the active operative an adjustment of the axis of rotation of the wheel and a vertical adjustment are simultaneously effected, so that in the inactive position the wheel will not protrude above the conveying means, whilst on putting the wheel into its operative position it is not only put at the desired height relative to the conveying means, but can also be arranged at a desired angle with its axis of rotation.

With the conveying device according to the above-mentioned Dutch patent 174,930 the conveying means are formed by rolls which can be rotated about their axes of rotation extending perpendicularly to the intended direction of displacement of the objects. The conveying means may also be formed by other means, however, within the spirit and scope of the present invention. So Dutch patent 169,852 discloses a conveying device wherein the conveying means is formed by an endless belt. Also with this known conveying device there is provided a turn off mechanism provided with wheels whose axes of rotation assume a fixed position relative to the conveying direction of the conveying means, whilst the wheel may be vertically adjustable.

A further embodiment of such a device is described in US patent specification 4,328,889. There the conveying means are formed by a pair of belt conveyors being in line, whilst the turn off mechanism is arranged between the ends of the belt conveyors located near each other.

It will be apparent that such a conveying device may be constructed in several manners, but as the further construction of the conveying device is not part of the invention only an explanation of the construction of the turn off mechanism will be given in the following description of a few embodiments of the construction according to the invention.

Fig. 1 diagrammatically illustrates the arrangement of a single wheel which is vertically adjustable whilst the axis of rotation of the wheel is adjusted simultaneously.

Fig. 2 diagrammatically illustrates the arrangement of a number of wheels, arranged side by side, for a turn off mechanism according to the invention.

Fig. 3 diagrammatically illustrates a second embodiment for the arrangement of a number of wheels for a turn off mechanism according to the invention.

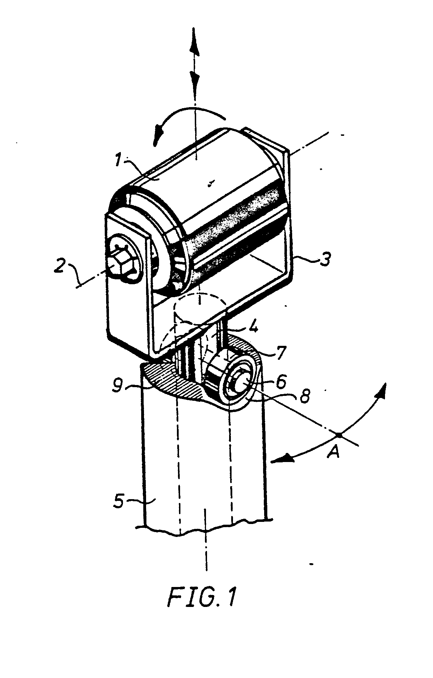

As is illustrated in fig. 1 a wheel or roller 1 is journalled rotatably about an axis of rotation 2 in the legs of a U-shaped bow 3 extending parallel to each other. The bow 3 is fixed to the upper end of an adjusting shaft 4 which is accommodated rotatably about its centre line in a bearing bush 5.

Ball bearings 7 provided on said journals are fixed to said shaft a short distance below the bow journals 6 and extend perpendicularly to the adjusting shaft 4.

The freely rotatable outer rings of said ball bearings 7 forming cam shaped means co-operate with the end surface of the bearing bush 5. As appears from fig. 1 two recesses, located diametrically opposite each other, are thereby provided in said end of the bearing bush, each forming a more or less V-shaped guide face 8 for the cam shaped means 7 co-operating with said guide faces 8, the centre line of the adjusting shaft 4 crossing the parts of the guide face extending obliquely upwardly from the lowest point of the guide face at an angle deviating from 90°.

The upper ends of the guide faces 8 are mutually connected by further guide faces 9 which extend perpendicularly to the centre line of the adjusting shaft.

It will be apparent that if the adjusting shaft 4 is rotated about its centre line from the position illustrated in fig. 1 into the one or the other direction by means of adjusting means not shown, as indicated by means of the double arrow A, the cam shaped means 7 will be moved over the guide faces 8, so that the adjusting shaft is not only rotated about its centre line, but is also moved upwards in vertical direction until the cam shaped means 7 rest on the further guide faces 9.

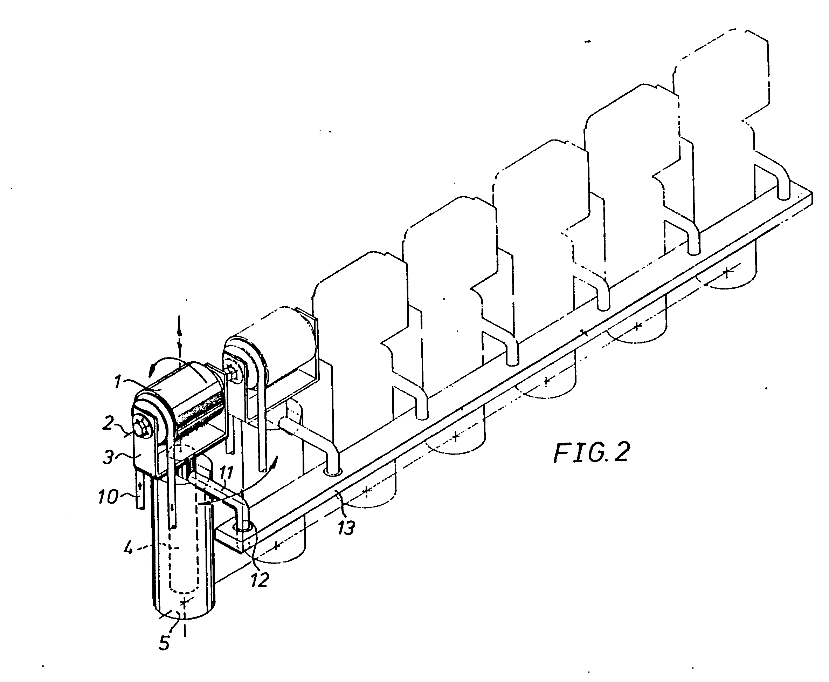

In a usual turn off mechanism a number of rolls or wheels will be arranged side by side, as diagrammatically illustrated in fig. 2. The rolls 1 can thereby be driven by means of the belt 10, e.g. in one of the manners described in the above-mentioned publications.

In the embodiment illustrated in fig. 2 shafts 11, co-operating directly with the guide faces 8, are connected to the adjusting shafts 4 instead of the journals 6, the ends 12 of said shafts 11 being deflected perpendicularly downwardly. The deflected ends 12 associated to wheels or rolls 1 arranged in a row are rotatably accommodated in corresponding holes which are provided in a connecting rod 13 connecting said deflected ends 12. It will be apparent that by adjusting the connecting rod 13 in its longitudinal direction by means of adjusting means not shown the rolls or wheels 1 can be put from their inactive position illustrated in fig. 2, in which position the axes of rotation of the rolls will extend at least substantially perpendicularly to the direction of displacement of the objects displaced by means of conveying means not shown, into a position in which said axes of rotation of the rolls or wheels 1 include an angle deviating from 90° with said direction of displacement, whilst the wheels or rolls 1 are also pressed upwards in order to protrude from the conveying means in question and to be able to make contact with the objects.

It will be apparent that by regulating the stroke of the connecting rod 13 also the angle which the axes of rotation of the wheels or rolls 1 include with the conveying device can thereby be regulated.

With the construction illustrated in fig. 2 there is furthermore provided, for every roll or wheel 1, a cam shaped means, here formed by the shaft 11, and a guide face co-operating therewith.

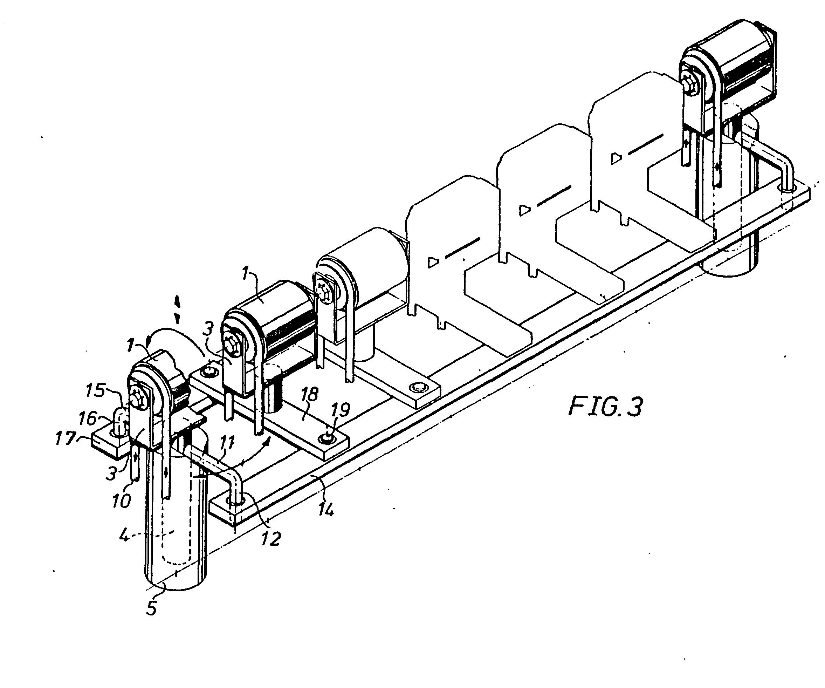

Fig. 3 illustrates an embodiment whereby only the outermost wheels or rolls of a number of wheels or rolls arranged in a line are provided on adjusting shafts 4. The deflected ends 12 of the shafts 11 connected to said adjusting shafts 4 are mutually connected again by means of a connecting rod 14.

Sideward from the adjusting shafts 4 facing away from the shafts 11 there are connected further shafts 15 forming cam shaped means, located in line with the shafts 11, the ends 16 of said further shafts 15, deflected perpendicularly downwardly, being mutually connected by a further connecting rod 17 extending parallel to the connecting rod 14. Although it does not appear from fig. 3 guide faces 8 are also provided in the upper ends of the relevant bearing bushes 5 for the two cam shaped means or shafts 15.

As furthermore appears from fig. 3 the ends of a number of connecting bars 18 are pivotally coupled, by means of pivot pins 19 extending parallel to the deflected ends 12 and 16, to the two connecting rods 14 and 17 extending parallel to each other. To each of the connecting bars there is again fixed a bow 3 supporting a roll 1.

It will be apparent that also with this embodiment an adjustment of the axes of rotation of the wheels and also a simultaneous reciprocating movement of all wheels or rolls will take place by moving the connecting rod 14 or the connecting rod 17 in their longitudinal directions.

Of course variations and/or additions to the embodiments described hereinabove and illustrated in the figures will be possible within the scope of the invention.

Thus the adjusting shafts 5 are adjustable in two directions from the inactive position of the rolls or wheels 1 with the embodiments illustrated. It will also be conceivable, however, to make the construction such that the wheels or rolls are only adjustable in one direction. An advantage of the invention is thereby that when using the same parts the angle at which the axes of rotation of the rolls 1 can be adjusted can be regulated easily. This is important e.g. when the turn off mechanism, when seen in the conveying direction, comprises several rows of guide rolls whereby the axes of rotation of the rolls of a row located more upstream in general must be pivoted at a smaller angle from the inactive position than the axes of rotation of a row located more upstream.

Furthermore the centre lines of the adjusting shafts 5 intersect the axes of rotation of the rolls 1 located thereabove in the embodiments illustrated, but also an embodiment whereby the centre lines of the adjusting shafts 5 cross the axes of rotation of the rolls 1 will be possible.

It will also be possible for the guide faces to be connected cam shaped means to be connected to the frame.

## Claims

1. Conveying device provided with a frame, with drivable conveying means supported by the frame, and with a turn off mechanism with at least a number of wheels (1) rotatable about axes of rotation (2), which are located at least substantially behind one another when seen in a direction transverse to the conveying direction of the conveying means, the wheels (1) being turnable about longitudinal axes of adjusting shafts (4) between an inactive position and an operative position in which the axes of rotation (2) of the wheels (1) include an angle deviating from 90° with the conveying direction of the conveying means, characterized in that a wheel is displaceable to and fro in an adjustment direction corresponding to the axial direction of the adjusting shaft (4), the wheel or the frame being provided with a cam shaped means (7) and the frame or the wheel with a guide face (8) which is crossed by the adjusting shaft (4) at an angle deviating from 90° such that on turning of the wheel about the longitudinal axis of the adjusting shaft (4) from its inactive position the cam shaped means (7) and the guide face (8) move relative to each other and thus effect a displacement of the wheel (1) in said adjustment direction.

2. Conveying device according to claim 1, characterized in that a wheel (1) can be turned from its inactive position in two opposite directions by means of the adjusting shaft (4).

3. Conveying device according to claims 1 or 2, characterized in that an adjusting shaft (4) is turnable in a bearing bush (5), the upper end thereof being provided with at least one guide surface (8) which co-operates with the cam shaped means (7) connected with the adjusting shaft (4).

4. Conveying device according to any one of the preceding claims, characterized in that the rotatable wheels (1) arranged in a row are mutually connected by means of a connecting rod (14), such that they can be jointly adjusted from the inactive position into an operative position and vice versa.

5. Device according to any one of the preceding claims, characterized in that for each of the rotatable wheels (1) arranged in a row there is provided a cam shaped means (7) and a guide face (8).

6. Conveying device according to any one of the preceding claims 1—4, characterized in that the wheels (1) arranged in a row are supported by carriers (11, 18) which are pivotally coupled by means of a pair of connecting rods (14, 17), such that the carriers (11, 18) and the connecting rods (14, 17) form a parallelogram mechanism, whilst the carriers (11) of a pair of wheels (1) located near the ends of the parallelogram mechanism form the cam shaped means.

## Patentansprüche

1. Fördervorrichtung mit einem Rahmen, mit einer antreibbaren Fördereinrichtung, die durch den Rahmen gehalten ist, und mit einer Ablenkvorrichtung mit mindestens einer Anzahl von Rädern (1), die um Drehachsen (2) drehbar und die im wesentlichen eines hinter dem anderen angeordnet sind, wenn sie in einer Richtung quer zur Förderrichtung der Fördereinrichtung betrachtet werden, wobei die Räder (1) um Längsachsen von Einstellwellen (4) zwischen einer inaktiven Stellung und einer wirksamen Stellung, in welcher die Drehachsen (2) der Räder (1) mit der Förderrichtung der Fördereinrichtung einen Winkel einschliessen, der von 90° abweicht, drehbar sind, dadurch gekennzeichnet, dass ein Rad in einer Einstellrichtung auf und ab verstellbar ist, die der axialen Richtung der Einstellwelle (4) entspricht, wobei das Rad oder der Rahmen mit einem nockenförmigen Glied (7) und der Rahmen oder das Rad mit einer Führungsfläche (8) versehen sind, welche von der Einstellwelle (4) unter einem Winkel gekreuzt wird, der von 90° abweicht, so dass eine Drehung des Rades um die Längsachse der Einstellwelle (4) von ihrer inaktiven Stellung eine relative Bewegung des nockenförmigen Gliedes (7) und der Führungsfläche (8) zueinander ergeben, wodurch eine Verstellung des Rades (1) in der Einstellrichtung bewirkt wird.

2. Fördervorrichtung nach Anspruch 1, dadurch gekennzeichnet, dass ein Rad (4) von seiner inaktiven Stellung in zwei entgegengesetzten Richtungen mittels der Einstellwelle (4) gedreht werden kann.

3. Fördervorrichtung nach Anspruch 1 oder 2, dadurch gekennzeichnet, dass eine Einstellwelle (4) in einer Lagerbuchse (5) drehbar ist, deren oberes Ende mit mindestens einer Führungsfläche (8) versehen ist, die mit einem nockenförmigen Glied (7) zusammenwirkt, die mit der Einstellwelle (4) verbunden ist.

4. Fördervorrichtung nach einem der vorhergehenden Ansprüche, dadurch gekennzeichnet, dass die in einer Reihe angeordneten drehbaren Räder (4) gegenseitig mittels einer Verbindungsstange (14) verbunden sind, so dass sie gemeinsam von der inaktiven Stellung in die wirksame Stellung, und umgekehrt, verstellt werden können.

5. Vorrichtung nach einem der vorhergehenden Ansprüche, dadurch gekennzeichnet, dass für jedes der in einer Reihe angeordneten drehbaren Räder (1) ein nockenförmige Glied (7) und eine Führungsfläche (8) vorgesehen ist.

6. Fördervorrichtung nach einem der Ansprüche 1 bis 4, dadurch gekennzeichnet, dass die in einer Reihe angeordneten Räder (1) durch Träger (11, 18) gehalten sind, die mittels eines Paares von Verbindungsstangen (14, 17) miteinander verschwenkbar gekoppelt sind, so dass die Träger (11, 18) und die Verbindungsstangen (14, 17) eine Parallelogrammvorrichtung bilden, während die Träger (11) eines Paares von Rädern (1), das nahe den Enden der Parallelogrammvorrichtung angeordnet sind, das nockenförmige Glied bilden.

**Revendications**

1. Dispositif de transport muni d'un bâti avec des moyens de transport commandés soutenus par le bâti et un mécanisme de changement de direction avec au moins un nombre de roues (1) tournant autour d'axes de rotation (2) qui sont situés au moins sensiblement l'une derrière l'autre lorsque vues dans uns direction transversale à la direction de transport des moyens de transport, les roues (1) tournées autour d'axes longitudinaux d'arbres de réglage (4) entre une position inactive et une position de fonctionnement dans laquelle les axes de rotation (2) des roues (1) comprennent un angle qui diffère de 90° par rapport à la direction de transport des moyens de transport, caractérisé en ce qu'une roue se déplace en va et vient dans une direction de réglage correspondant à la direction axiale de l'arbre de réglage (4), la roue ou le bâti étant muni de moyens en forme de came (7) et le bâti ou la roue d'une face de guidage (8) traversée par l'arbre de réglage (4) avec un angle qui diffère de 90°, de telle manière que lorsque la roue tourne autour de l'axe longitudinal de l'arbre de réglage (4) à partir de sa position inactive, les moyens en forme de came (7) et la face de guidage (8) se déplacent l'un par rapport à l'autre et réalisent ainsi le déplacement de la roue (1) dans ladite direction de réglage.

2. Dispositif de transport selon le revendication 1 caractérisé en ce qu'une roue (1) peut être tournée à partir de sa position inactive dans deux directions opposées, à l'aide de l'arbre de réglage (4).

3. Dispositif de transport selon la revendication 1 et 2 caractérisé en ce qu'un arbre de réglage (4) peut tourner dans une douille (5), l'extrémité supérieure étant munie d'au moins une face de guidage (8) qui fonctionne conjointement avec un moyen en forme de came (7) relié à l'arbre de réglage (4).

4. Dispositif de transport selon l'une quelconque des revendications précédentes, caractérisé en ce que les roues (1) rotatives disposées en rangée, sont reliées entre elles par une tige (14) de telle sorte qu'elles peuvent être réglées de façon solidaire depuis la position inactive à sa position de fonctionnement et vis versa.

5. Dispositif de transport selon l'une quelconque des revendications précédentes, caractérisé en ce que, pour chacune des roues (1) rotatives disposées en rangée, est prévu un moyen en forme de came (7) et une face de guidage (8).

6. Dispositif de transport selon l'une quelconque des revendications précédentes 1 à 4, caractérisé en ce que les roues (1) disposées en rangée sont soutenues par des supports (11, 18) qui sont assemblés en pivots au moyen d'une paire de tiges (14, 17), de telle sorte que les supports (11, 18) et les tiges (14, 17) constituent un mécanisme à parallélogramme, tandis que les supports (11) d'une paire de roues (1) situés près des extrémités du mécanisme à paralléleogramme forment les moyens en forme de came.

FIG.1

FIG.2

FIG.3